# EUROPÄISCHE PATENTSCHRIFT

(11) **EP 0 572 869 B1**
(45) Veröffentlichungstag und Bekanntmachung des Hinweises auf die Patenterteilung: **26.07.1995**
(21) Anmeldenummer: 93108165.7
(22) Anmeldetag: 19.05.1993
(51) Int. Cl.: B60M 1/234

(54) **Fahrleitungsstützpunkt**
Catenary wire support
Support de fil caténaire

(30) Priorität: 03.06.1992 DE 9207518 U
(43) Veröffentlichungstag der Anmeldung: 08.12.1993
(73) Patentinhaber: SIEMENS AKTIENGESELLSCHAFT, 80333 München (DE)
(72) Erfinder: Menhorn, Hermann, W-2410 Mölln (DE)

(56) Entgegenhaltungen:
- DE-A- 3 809 716
- DE-U- 8 705 098
- US-A- 4 230 209

## Beschreibung

Die Erfindung betrifft einen Fahrleitungsstützpunkt gemäß Oberbegriff des Anspruchs 1.

Ein derartiger Fahrleitungsstützpunkt ist durch die US-A-4 230 209 bekannt. Im bekannten Fall ist die Dämpfungseinrichtung als Spiralfeder ausgebildet. Die Spiralfeder dient dazu, die vom Rillenfahrdraht ausgehenden und auf den Stromabnehmer wirkenden Schwingungen zu dampfen. Durch das dadurch verbesserte Schwingungsverhalten des Fahrdrahtes wird eine verbesserte Stromabnahme erreicht.

Weiterhin ist aus der EP-B-0 111 730 ein Fahrleitungsstutzpunkt bekannt, der dazu dient, einen profilierten Fahrdraht, der einen ununterbrochenen Strang bildet und als von unten bestrichene Stromschiene ausgebildet ist, in Längsrichtung unverschieblich an einer Decke eines Bauwerks, vorzugsweise eines Tunnels, aufzuhängen. Aufgrund der steifen Fahrdrahtaufhängung werden alle Schwingungen vom Gleisoberbau und vom Fahrzeug über den Stromabnehmer auf die Stromschiene und damit auf das Bauwerk übertragen, wodurch entsprechende Gegenresonanzen erzeugt werden. Bei starken Schwingungen, hervorgerufen durch schlechten Gleisoberbau, riefenhaltige Schleifstücke und höhere Geschwindigkeiten, entsteht eine starke Lichtbogenbildung, die bis zur Stromunterbrechung führen kann.

Aufgabe der vorliegenden Erfindung ist es deshalb, einen Fahrleitungsstützpunkt zu schaffen, der die vom Fahrzeug ausgehenden Schwingungen weitestgehend dämpft.

Diese Aufgabe wird erfindungsgemäß durch die Merkmale im kennzeichnenden Teil des Anspruchs 1 gelöst.

Bei dem erfindungsgemäßen Fahrleitungsstützpunkt werden die beim Befahren des Gleises auftretenden Schwingungen im Halter weitestgehend gedämpft, so daß keine gefährlichen Schwingungen auf das Bauwerk übertragen werden. Gleichzeitig werden die vom Stromabnehmer ausgehenden harten Schläge durch die Dämpfungseinrichtung gedämpft und weitestgehend absorbiert. Durch die Dämpfung der auftretenden Schwingungen und Stöße werden entsprechende Gegenresonanzen des Systems Fahrleitung-Gebäude sowie ein daraus resultierendes unerwünschtes Springen des Pantographen zuverlässig verhindert. Damit wird auch die dabei auftretende Lichtbogenbildung vermieden, so daß durch den Fahrleitungsstützpunkt gemäß Anspruch 1 der elektrische Abrieb am Fahrdrahtspiegel, das ist die Fläche an welcher der Pantograph entlanggleitet, wesentlich verringert wird.

Der Fahrleitungsstützpunkt nach Anpsruch 1 ist für alle profilierten Fahrdrähte einsetzbar, bei denen eine Übertragung von Schwingungen, die beim Befahren des Gleises auftreten können, weitestgehend vermieden werden soll. Besonders gut ist der erfindungsgemäße Fahrleitungsstützpunkt jedoch für Fahrdrähte geeignet, die als hochkant angeordnete Stromschienen (z.B. U-Bahn-Oberleitungen) ausgebildet und an der Decke eines Bauwerks (z.B. Tunnel) befestigt sind.

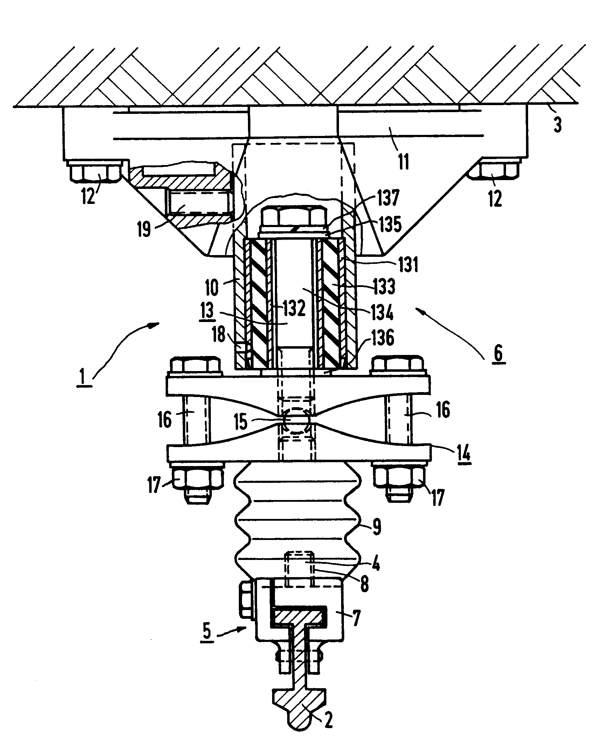

Weitere Vorteile und Einzelheiten der Erfindung ergeben sich aus der nachfolgenden Beschreibung eines Ausführungsbeispiels anhand der Zeichnung und in Verbindung mit den Unteransprüchen.

In der Zeichnung ist ein Halter 1 des erfindungsgemäßen Fahrleitungsstützpunktes dargestellt. Der Halter 1 dient im gezeigten Ausführungsbeispiel zur unverschieblichen Aufhängung eines als Stromschiene ausgebildeten Fahrdrahtes 2 an einer Tunneldecke 3. Die hochkant angeordnete profilierte Stromschiene 2 ist in gewundener Form an mehreren Haltern 1 in Längsrichtung an der Tunneldecke 3 unverschieblich aufgehängt. Die gewundene Form wird dadurch erreicht, daß die Stromschiene 2 zwischen den aufeinanderfolgenden, unverschieblichen Haltern 1 jeweils seitlich ausgebogen ist, so daß eine Zickzack-Form entsteht, wobei die Halter 1 in der Fahrachse liegen oder nach Art einer Sinuslinie an der Tunneldecke 3 befestigt sein können, um dadurch eine gleichmäßige Abnutzung des Stromabnehmerschleifstückes auf seiner Breite zu erzielen.

Der Halter 1 besteht aus zwei um eine senkrechte Achse 4 gegeneinander drehbaren Teilen 5 und 6. Der erste Teil 5 wird durch eine Stromschienenklemme 7 mit einer daran angegossenen senkrechten Achse 4 gebildet, während der zweite Teil 6 aus einem die senkrechte Achse 4 aufnehmenden Lager 8, einem Isolator 9, einem Hohlrohr 10 und einer Ankerplatte 11 besteht. Die Ankerplatte 11 wird mittels zweier Befestigungsschrauben 12 an der Tunneldecke 3 fest angeschraubt. In einfachster Weise ist die senkrechte Achse 4 aus einem an der Stromschienenklemme 7 angegossenen Gewindebolzen gebildet, der in eine als Lager 8 dienende Gewindebohrung im Isolator 9 eingedreht ist und dort Drehbewegungen ausführen kann.

Im Hohlrohr 10 ist eine Dämpfungseinrichtung 13 gehalten, die zur Dämpfung der auf die Stromschiene 2 übertragenen Schwingungen dient.

Das Hohlrohr 10 kann auf seiner der Stromschiene 2 zugewandten Seite über die teilweise herausragende Dämpfungseinrichtung 13 direkt am Isolator 9 befestigt sein. Im vorliegenden Ausführungsbeispiel ist jedoch zwischen dem Isolator 9 und der aus dem Hohlrohr 10 herausragenden Dämpfungseinrichtung 13 eine Neigungsverstellklemme 14 angeordnet. Durch die Neigungsverstellklemme 14 ist der erste Teil 5 des Halters 1 und damit die Stromschiene 2 stufenlos um einen in Längsrichtung der Stromschiene 2 liegenden Bolzen 15 schwenkbar und durch Halteschrauben 16 und Spannmuttern 17 in ihrer gewünschten Neigung festlegbar. Dadurch ist der erste Teil 5 mit seiner Längsachse parallel zur Mittelsenkrechten auf die Fahrebene ausrichtbar. Die Lage der Mittelsenkrechten auf die Fahrebene, das ist bei Bahnen die Ebene zwischen den Oberkanten der Schienen, ist aufgrund von Gleisüberhöhungen im allgemeinen nicht lotrecht. Durch die Neigungsverstellklemme 14 sind darüber hinaus bei der Montage der Fahrleitungsstützpunkte auch Toleranzen im Bauwerk sowie die Bauart der jeweiligen Anlage (Rundtunnel, offene Bauweise usw.) auf einfache Weise zu berücksichtigen.

Die Dämpfungseinrichtung 13 ist im gezeigten Ausführungsbeispiel als Metallgummibuchse (Megibuchse) ausgebildet und im Preßsitz im Hohlrohr 10 gehalten sowie durch einen Justierkerbstift 18 in ihrer axialen Lage im Hohlrohr 10 gesichert. Die Megibuchse 13 besteht aus einem äußeren Stahlmantel 131 und einem inneren Stahlkern 132 sowie einer dazwischenliegenden Gummischicht 133. Der Stahlkern 132 weist eine Durchgangsbohrung auf, in die eine Verbindungsschraube 134 bis zu ihrem Schraubenkopf einsteckbar ist.

Die Megibuchse 13 ist an ihren Stirnseiten von jeweils einer Abdeckscheibe 135 bzw. 136 abgedeckt. Die auf der oberen Stirnseite aufliegende Abdeckscheibe 135 weist eine Durchgangsbohrung auf, wohingegen die an der unteren Stirnseite anliegende Abdeckscheibe 136 eine Gewindebohrung aufweist, in welche der Gewindestift der Verbindungsschraube 134 nach unten überstehend eingeschraubt ist. Zur Sicherung der Verbindungsschraube 134 gegen ein Verdrehen ist zwischen der Abdeckscheibe 135 und dem Kopf der Verbindungsschraube 134 eine Federscheibe 137 vorgesehen.

Die nach unten überstehende Verbindungsschraube 134 ist in dem dargestellten Beispiel in eine Gewindebohrung der Neigungsverstellklemme 14 eingeschraubt. Es ist jedoch auch möglich, den nach unten überstehenden Teil der Verbindungsschraube 134 direkt in eine Gewindebohrung des Isolators 9 einzuschrauben.

In beiden Fällen werden die auftretenden Schwingungen und Stöße durch die Abdeckscheibe 136 auf den inneren Stahlkern 132 übertragen. Da sich die Abdeckscheiben 135 und 136 radial nur bis zur Gummischicht 133 erstrecken, werden die auf den inneren Stahlkern 132 wirkenden Schwingungen und Stöße über die Gummischicht 133 gedämpft bzw. absorbiert und nur stark abgeschwächt an den äußeren Stahlmantel 131 und damit an das Hohlrohr 10 weitergegeben. Die beim Befahren des Gleises auftretenden Schwingungen werden dadurch im Halter 1 weitestgehend gedämpft bzw. abgebaut, so daß keine gefährlichen Schwingungen auf die Tunneldecke 3 übertragen werden.

Die Länge des Hohlrohres 10 kann der jeweiligen Höhenlage der Stromschiene 2 angepaßt und mit einer Zentrierschraube 19 in der Endlage festgehalten werden. Darüber hinaus kann durch die Zentrierschraube 19 eine Höhenfeineinstellung der Stromschiene 2 vorgenommen werden.

## Patentansprüche

1. Fahrleitungsstützpunkt mit wenigstens einem an einer Decke (3) eines Bauwerks befestigbaren Halter (1) zur unverschieblichen Aufhängung eines profilierten Fahrdrahtes (2), wobei im Halter (1) wenigstens eine Dämpfungseinrichtung (13) angeordnet ist, **dadurch gekennzeichnet,**
daß die Dämpfungseinrichtung (13) zur Dämpfung der auf den Fahrdraht (2) übertragenen Schwingungen ausgebildet ist und daß der Halter (1) aus zwei um eine senkrechte Achse (4) gegeneinander drehbaren Teilen (5,6) besteht, wobei der erste Teil (5) des Halters (1) durch eine Fahrdrahtklemme (7) mit daran angeformter senkrechter Achse (4) gebildet ist und der zweite Teil (6) aus einem die senkrechte Achse (4) aufnehmenden Lager (8), einem Isolator (9), einem Hohlrohr (10) und einer Ankerplatte (11) besteht.

2. Fahrleitungsstutzpunkt nach Anspruch 1,
**dadurch gekennzeichnet,**
daß die Dämpfungseinrichtung (13) im zweiten Teil (6) des Halters (1) angeordnet ist.

3. Fahrleitungsstützpunkt nach Anspruch 1,
**dadurch gekennzeichnet,**
daß die Dämpfungseinrichtung (13) im Hohlrohr (10) angeordnet ist.

4. Fahrleitungsstützpunkt nach Anspruch 3,
**dadurch gekennzeichnet,**
daß die Dämpfungseinrichtung (13) als Metallgummibuchse (13) ausgebildet ist, wobei die Metallgummibuchse (13) aus einem äußeren Stahlmantel (131) und einem inneren Stahlkern (132) sowie einer dazwischenliegenden, als Dämpfungselement wirkenden Gummischicht (133) besteht.

5. Fahrleitungsstützpunkt nach Anspruch 4,
**dadurch gekennzeichnet,**
daß die Metallgummibuchse (13) durch einen Justierkerbstift (18) in ihrer axialen Lage im Hohlrohr (10) gesichert ist.

6. Fahrleitungsstützpunkt nach einem der Ansprüche 3 bis 5,
**dadurch gekennzeichnet,**
daß die Dämpfungseinrichtung (13) mittels einer Verbindungsschraube (134) mit dem Isolator (9) kraftschlüssig verbunden ist.

## Claims

1. A catenary support with at least one holder (1), which can be secured to a roof (3) of a structure, for the non-displaceable suspension of a profiled catenary (2), at least one damping device (13) being arranged in the holder (1), characterised in that the damping device (13) is constructed for damping the vibrations transmitted to the catenary (2) and the holder (1) comprises two parts (5, 6), which are rotatable relative to one another about a vertical axle (4), the first part (5) of the holder (1) being formed by a catenary clamp (7) with a vertical axle (4) integrally formed thereon, and the second part (6) being formed by a bearing (8) accommodating the vertical axle (4), an insulator (9), a hollow tube (10) and an anchor plate (11).

2. A catenary support according to claim 1,
characterised in that the damping device (13) is arranged in the second part (6) of the holder (1).

3. A catenary support according to claim 1,
characterised in that the damping device (13) is arranged in the hollow tube (10).

4. A catenary support according to claim 3,
characterised in that the damping device (13) is constructed as a metal-rubber bushing (13), the metal-rubber bushing (13) comprising an outer steel casing (131) and an inner steel core (132) as well as an intermediate rubber layer (133) acting as a damping element.

5. A catenary support according to claim 4,
characterised in that the metal-rubber bushing (13) is secured in its axial position in the hollow tube (10) by means of an adjustable slotted pin (18).

6. A catenary support according to one of claims 3 to 5, characterised in that the damping device (13) is connected to the insulator (9) in a positive-locking manner by means of a connecting screw (134).

## Revendications

1. Point d'appui pour caténaire comportant au moins un support (1) pouvant être fixé à un plafond d'un ouvrage ou bâtiment pour suspendre, en position immobile, une caténaire profilée (2), au moins un dispositif amortisseur (13) étant disposé dans le support (1), caractérisé par le fait
que le dispositif amortisseur (13) est agencé pour amortir les oscillations transmises à la caténaire (2) et que le support (1) est constitué de deux parties (5,6) pouvant tourner l'une par rapport à l'autre autour d'un axe vertical (4), la première partie (5) du support (1) étant formée par une pince (7) de retenue de la caténaire, qui comporte un axe vertical (4) formé sur cette pince, tandis que la seconde partie (6) est constituée par un palier (8) qui reçoit l'axe vertical (4), et par un isolateur (9), un tube creux (10) et une plaque d'ancrage (11).

2. Point d'appui pour caténaire suivant la revendication 1, caractérisé par le fait que le dispositif amortisseur est agencé dans la seconde partie (6) du support (1).

3. Point d'appui pour caténaire suivant la revendication 1, caractérisé par le fait que le dispositif amortisseur (13) est agencé dans le tube creux (10).

4. Point d'appui pour caténaire suivant la revendication 3, caractérisé par le fait que le dispositif amortisseur (13) est réalisé sous la forme d'un manchon métal-caoutchouc (13), qui est constitué par une enveloppe extérieure en acier (131) et un noyau intérieur en acier (132) ainsi que par une couche intercalaire de caoutchouc (133) qui agit en tant qu'élément amortisseur.

5. Point d'appui pour caténaire suivant la revendication 4, caractérisé par le fait que le manchon métal-caoutchouc (13) est bloqué dans sa position axiale dans le tube creux (10) par une tige d'ajustement encochée (18).

6. Point d'appui pour caténaire suivant l'une des revendications 3 à 5, caractérisé par le fait que le dispositif amortisseur (13) est relié selon une liaison de force à l'isolateur (9) au moyen d'une vis de liaison (134).
